# EUROPEAN PATENT APPLICATION

(11) **EP 4 292 864 A1**
(43) Date of publication of application: **20.12.2023**
(21) Application number: 22179033.0
(22) Date of filing: 14.06.2022
(51) Int. Cl.: B60L 50/60, B60L 50/70, B60L 50/75, B60L 58/12, B60L 58/31, B60L 58/40, H01M 16/00

(54) **A METHOD FOR CONTROLLING A POWER ASSEMBLY**

(71) Applicant: VOLVO TRUCK CORPORATION, 405 08 Göteborg (SE)
(72) Inventor: LUONG, Staffan, 504 75 Borås (SE); AUDHAV, Tove, 438 34 Landvetter (SE)
(74) Representative: Valea AB

(57) **Abstract**

The invention relates to a method for controlling a power assembly comprising a fuel cell unit and an electric energy storage system. The method comprises:
- *predicting* (S1) a power demand for power delivery from the power assembly over a prediction horizon,
- *calculating* (S2) costs associated with controlling the power assembly according to at least two different control scenarios during the prediction horizon, wherein the at least two different control scenarios include a first control scenario in which the fuel cell unit is turned off, and a second control scenario in which the fuel cell unit is turned on. For each of said control scenarios, the associated cost includes at least a cost associated with an expected ability or non-ability of the power assembly to deliver power according to the predicted power demand, a cost associated with fuel consumption, and a cost associated with fuel cell degradation,
- *comparing* (S3) the calculated costs of the respective at least two control scenarios to obtain a comparison result,
- *selecting* (S4) one of the at least two control scenarios based on the comparison result, and
- *controlling* (S5) the power assembly according to the selected control scenario.

## Description

### TECHNICAL FIELD

The invention relates to a method for controlling a power assembly comprising one or more fuel cell units and an electric energy storage system. It further relates to a power assembly, a control unit, a vehicle, a computer program, and a computer readable medium.

Although the invention will be described with respect to a truck, the invention is not restricted to this particular vehicle, but may also be used in other vehicles such as passenger cars and off-road vehicles. The invention may also be applied in vessels and in stationary applications, such as in grid-connected supplemental power generators or in grid-independent power generators.

### BACKGROUND

Fuel cell systems can be used as an alternative or as a complement to electric batteries for powering of electric vehicles, but also in stationary applications such as in grid-connected and grid-independent power generators.

When a fuel cell system operates at low current densities, the polarisation cell voltage of the fuel cells increases, which in turn has a negative impact on the durability of the fuel cells. To save the fuel cells from degradation, an operational maximum polarisation cell voltage is set, meaning in practice that the lowest operational power of the fuel cells is limited. In certain situations, such as when a vehicle powered by the fuel cell system travels downhill, the fuel cell system may therefore be operated at a higher power than necessary in view of a power demand of the vehicle. Excess power generated by the fuel cell system may in that case be stored in a battery. However, when the battery has reached its maximum state-of-charge, SoC, power generated by the fuel cell system may instead be dissipated and thereby wasted.

In order to avoid energy dissipation, control strategies exist according to which the fuel cell system is turned off when the SoC of the battery is relatively high and the power demand is low. US 2016/0046204 discloses such a method for controlling a fuel cell system of a vehicle, wherein the fuel cell is controlled to be on or off depending on a predicted power need of the vehicle and the SoC of a battery. However, turning on and off of the fuel cell is associated with fuel cell degradation and thereby affects the service life of the fuel cell negatively.

### SUMMARY

A primary object of the invention is to provide a method for controlling a power assembly comprising a fuel cell unit and an electric energy storage system, which method is in at least some aspect improved with respect to known methods. In particular, it is an object to provide an in at least some aspect improved method for cost efficient control of the power assembly.

At least the primary object is achieved by a method according to claim 1.

Thus, a computer-implemented method for controlling a power assembly is provided. The power assembly comprises a fuel cell unit and an electric energy storage system for storing excess electric energy produced by the fuel cell unit. The power assembly may comprise more than one fuel cell unit, such as at least two independently operable fuel cell units, i.e., fuel cell units that can be controlled to an on-state or an off-state independently of one another. The method comprises:
- *predicting* a power demand for power delivery from the power assembly over a prediction horizon,
- *calculating* costs associated with controlling the power assembly according to at least two different control scenarios during the prediction horizon, wherein the at least two different control scenarios include a first control scenario in which the fuel cell unit is turned off, and a second control scenario in which the fuel cell unit is turned on, wherein, for each of said control scenarios, the associated cost includes at least:
   a cost associated with an expected ability or non-ability of the power assembly to deliver power according to the predicted power demand,
   a cost associated with fuel consumption, and
   a cost associated with fuel cell degradation,
- *comparing* the calculated costs of the respective at least two control scenarios to obtain a comparison result,
- *selecting* one of the at least two control scenarios based on the comparison result, and
- *controlling* the power assembly according to the selected control scenario.

By calculating costs for at least two control scenarios in parallel, wherein in one control scenario the fuel cell unit is turned on and in another control scenario the fuel cell unit is turned off, it is possible to select the most beneficial cost scenario in terms of costs and abilities. Negative effects arising from turning on and off the fuel cell unit, such as costs arising due to fuel cell unit degradation, may herein be balanced against negative effects arising from operating the power assembly with the fuel cell unit turned on although the power demand is relatively low, such as an increased fuel consumption.

The most beneficial control scenario is usually one in which the overall cost is lowest, although the costs may be weighted so that, e.g., the cost for non-compliance with the predicted power demand is given more weight than a high cost for fuel consumption, or the other way around. In a vehicle, such a weighting may, e.g., be performed based on a selected driving mode or on preferences set by a vehicle user, such as a driver or a fleet operator.

For example, a most beneficial control scenario may be one in which the power assembly is able to deliver output power in accordance with the predicted power demand, and in which the calculated cost associated with fuel consumption and fuel cell degradation is as low as possible. Thus, if the power assembly is in all of the at least two control scenarios able to deliver the predicted output power, the control scenario with the lowest calculated costs for fuel consumption and fuel cell degradation may be selected. If however the power assembly is only able to deliver the predicted output power in one of the compared control scenarios, typically with the fuel cell turned on, the cost associated with non-ability of the power assembly to deliver output power in accordance with the predicted power demand in the other control scenario(s) may be relatively high. Such a cost may be referred to as a cost for power derating. In a vehicle, power derating may entail a reduced vehicle speed and thereby lead to a cost associated with a certain delay. However, in some cases, it may lead to the vehicle being unable to climb a hill, in which case the cost for power derating may be unacceptably high.

The calculation of the costs may take as input parameters fuel consumption at idling, fuel-cell degradation at start-up and/or shut-down, fuel price, fuel cell unit price, fuel cell unit efficiency, fuel cell voltage cycling degradation cost, etc.

The prediction horizon may be set in terms of time. Alternatively, when the power assembly is configured for powering of a vehicle, the prediction horizon may be set in terms of distance. The prediction horizon may be a fixed value, or it may change, depending on e.g. foreseen stability in operating conditions. For example, when the power assembly is provided in a vehicle, the prediction horizon may be relatively long when the vehicle is travelling a known route, such as a previously travelled route, under known traffic conditions, while as it may be set relatively short when the vehicle is travelling along a route which is new to the vehicle. The prediction horizon may further be set in dependence on, for example, a data capacity of a memory used for storing data needed for and/or generated in the prediction.

The method may preferably be performed continuously, such as at a certain update frequency. Consequently, the control of the power assembly may be continuously updated according to the selected control scenario.

When the fuel cell unit is turned off, it does not provide any output power and it does not consume any fuel. When the fuel cell unit is turned on, it consumes fuel, such as hydrogen (H₂), and it supplies output power that may either be used by a power consumer, such as an electric motor of a vehicle, or stored in the electric energy storage system. The cost associated with fuel cell consumption therefore arises when the fuel cell is turned on.

Optionally, in the second control scenario, a ratio between power provided by the electric energy storage system and power provided by the fuel cell unit is allowed to vary over the prediction horizon. Thus, a power split between the electric energy storage system and the fuel cell unit may be allowed to vary, depending on, e.g., the predicted power demand.

Optionally, the power assembly comprises at least two fuel cell units, each of the at least two fuel cell units being independently controllable to an on-state in which the fuel cell unit is turned on and to an off-state in which the fuel cell unit is turned off, wherein the at least two control scenarios comprise a plurality of control scenarios, each one of the control scenarios being associated with a unique combination of on-state(s) and off-state(s) of the at least two fuel cell units. Hence, each fuel cell unit is controllable to one of two states. It follows that the number of available combinations, and hence the number of possible control scenarios, increase with the number of individually controllable fuel cell units. For a fuel cell system with *n* fuel cell units, a total of 2*ⁿ* control scenarios are possible. For example, for a fuel cell system comprising two fuel cell units, a total of four control scenarios are possible and thus the at least two control scenarios comprise first, second, third and fourth control scenarios. The proposed method makes it possible to account for differences in operating costs among the fuel cell units, such as fuel cell operating costs differing due to different ages and/or dimensions of the different fuel cell units.

Optionally, when the power assembly is operated with the fuel cell unit turned off, calculating the cost associated with controlling the power assembly according to the second control scenario comprises calculating a cost associated with start-up of the fuel cell unit. By start-up of the fuel cell unit is herein intended turning on the fuel cell unit and ramping up the power. This is on one hand associated with a fuel cost, on the other hand with a fuel cell unit degradation cost.

Optionally, when the power assembly is operated with the fuel cell unit turned on, calculating the cost associated with controlling the power assembly according to the first control scenario comprises calculating a cost associated with shutdown of the fuel cell unit. By fuel cell unit shutdown is herein intended ramping down the power and turning off the fuel cell unit. Generally, shutdown is associated with a fuel cell unit degradation cost.

Optionally, the expected ability or non-ability of the power assembly to deliver power according to the predicted power demand in at least the first control scenario is determined by obtaining a system state of the electric energy storage system and based thereon calculating said ability or non-ability. The system state may, e.g., comprise a electric energy storage system temperature, state of charge (SoC), state-of-health (SoH), acharge or discharge power capability, etc. Those system states are relevant for determining whether the electric energy storage system, typically comprising one or more batteries, is able to comply with the predicted power demand. The system states may, e.g., be received from a battery management unit or another control unit of the electric energy storage system.

Optionally, the cost associated with each one of the at least two control scenarios further comprises a cost associated with an expected electric energy storage system degradation. Such a cost may arise due to high battery temperature within the electric energy storage system, and/or a high battery throughput within the electric energy storage system, arising due to operation of the electric energy storage system at high power and/or high charging/discharging currents (C-rates).

Optionally, the method further comprises determining whether at least one predetermined condition is fulfilled, wherein the calculation of the costs for the at least two different control scenarios is only performed in response to the at least one predetermined condition being fulfilled. When the at least one predetermined condition is not fulfilled, costs for a single control scenario may be calculated. This has the advantage of saving computational power in cases in which it is not necessary to calculate costs for two control scenarios, e.g., because it is evident that the power assembly must be operated with the fuel cell turned either on or off. The method according to this embodiment is most useful when the power assembly comprises a single fuel cell unit, or several fuel cell units that are controlled in common to be either on or off. When the power assembly comprises several independently controllable fuel cell units, costs for a plurality of control scenarios may be calculated in parallel and the computational power that may be saved by omitting one of them may be neglectable. The at least one predetermined condition may comprise one or more conditions relating to SoC threshold(s) of the electric energy storage system, time threshold(s), and/or power demand threshold(s).

Optionally, the at least one predetermined condition comprises first and a second predetermined conditions, wherein, when the first predetermined condition is not fulfilled, the calculation of the costs is only performed for the first control scenario, and, when the second predetermined condition is not fulfilled, the calculation of the costs is only performed for the second control scenario.

Optionally, when the power assembly is being operated with the fuel cell unit turned on, the at least one predetermined condition is considered fulfilled when a state-of-charge of the electric energy storage system is above a first threshold level. The first threshold level may be set to a level below which the electric energy storage system is not expected to be able to deliver sufficient output power for a typical expected power demand. Thus, below the first threshold level, it cannot be expected that the power assembly will be able to comply with the predicted power demand if the fuel cell unit is turned off. Computational power may thereby be saved by only calculating the cost for continued operation with the fuel cell unit turned on. When the cost for continued operation with the fuel cell unit turned on is calculated, the power split between the fuel cell unit and the electric energy storage system may be allowed to vary over the prediction horizon.

Optionally, when the power assembly is being operated with the fuel cell unit turned off, the at least one predetermined condition is considered fulfilled when a state-of-charge of the electric energy storage system is below a second threshold level. The second threshold level may be set to a SoC at which the electric energy storage system is typically able to deliver output power in accordance with an expected power demand on its own, i.e., with the fuel cell unit turned off. As long as the SoC is above the second threshold level, only the cost for continued operation with the fuel cell unit turned off will be calculated.

Optionally, the power assembly is adapted to deliver power contributing to the propulsion of a vehicle, and *predicting* the power demand comprises:
- *receiving* vehicle related information comprising at least one of traffic information for an expected travelling route of the vehicle during the prediction horizon, terrain information for the expected travelling route, topographic information for the expected travelling route during the prediction horizon, weather information for the expected travelling route during the prediction horizon, and vehicle gross weight information, and
- using said received vehicle related information for *predicting* the power demand over the prediction horizon.

One or more of the above vehicle related pieces of information can contribute to a proper prediction of the power demand.

According to a second aspect, the above object is achieved by a control unit for controlling a power assembly, the control unit being configured to perform the method according to the first aspect. The control unit is to be understood as an electronic control unit.

According to a third aspect, the above object is achieved by a power assembly comprising one or more fuel cell units and an electric energy storage system for storing excess electric energy produced by the one or more fuel cell units, the power assembly further comprising the control unit according to the second aspect.

According to a fourth aspect, a vehicle comprising a power assembly according to the third aspect is provided, wherein the power assembly is adapted to deliver power contributing to the propulsion of the vehicle.

According to a fifth aspect, a computer program comprising program code means for performing the method according the first aspect when the program is run on a computer is provided. The computer may be the control unit according to the second aspect.

According to a sixth aspect, a computer readable medium carrying a computer program comprising program code means for performing the method according to the first aspect when the program is run on a computer is provided. The computer may be the control unit according to the second aspect.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.
- Fig. 1: is a schematic side view of a vehicle;
- Fig. 2: is a schematic view of a power assembly according to an example embodiment of the invention;
- Fig. 3: is a flow chart illustrating an embodiment of the method of the present invention, and
- Fig. 4a-b: are schematic block diagrams illustrating a control unit according to embodiments herein.

### DETAILED DESCRIPTION OF EXAMPLE EMBODIMENTS OF THE INVENTION

With reference to the appended drawings, below follows a more detailed description of embodiments of the invention cited as examples.

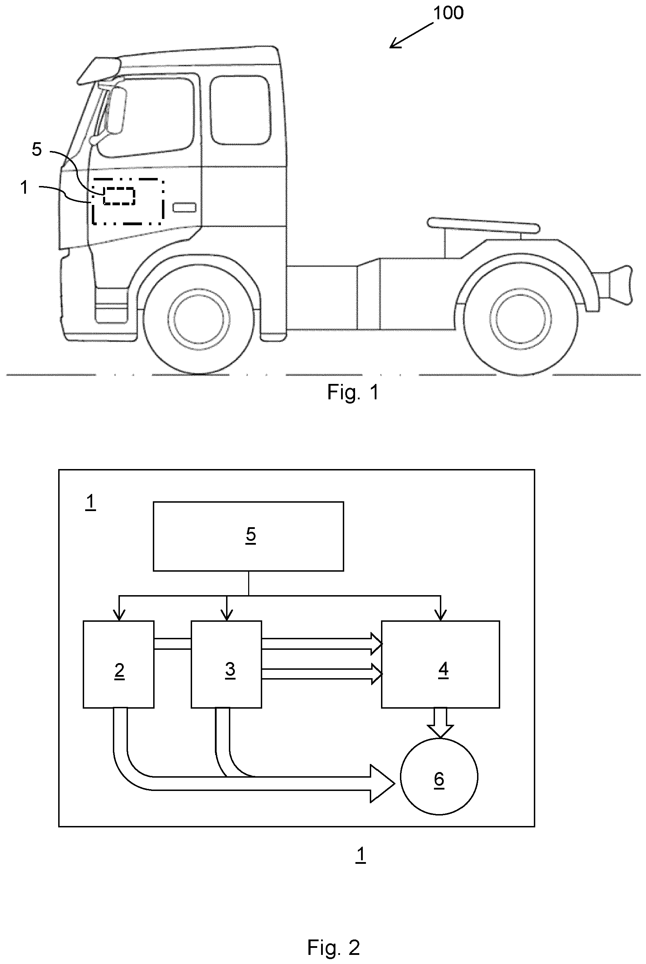

Fig. 1 depicts a side view of a vehicle 100 according to an example embodiment of the invention. The vehicle 100 is here a truck, more specifically a heavy-duty truck for towing one or more trailers (not shown). Even though a heavy-duty truck 100 is shown it shall be noted that the invention is not limited to this type of vehicle but may be used for any other type of vehicle, such as a bus, construction equipment, e.g. a wheel loader and an excavator, a passenger car, and for a marine vessel. The invention is also applicable for other applications not relating to vehicles as long as a power assembly comprising a fuel cell unit and an electric energy storage system, ESS, are utilized.

The vehicle 100 comprises a power assembly 1. The power assembly 1 is here used for powering one or more electric motors (not shown) which are used for creating a propulsion force to the vehicle 100. The power assembly 1 may additionally or alternatively be used for powering other electric power consumers (not shown) of the vehicle 100, such as an electric motor for a refrigerator system, an electric motor for an air conditioning system or any other electric power consuming function of the vehicle 100.

The vehicle 100 further comprises a control unit 5 according to an example embodiment of the invention. The control unit 5 is thus used for controlling the power assembly 1. Even though an on-board control unit 5 is shown, it shall be understood that the control unit 5 could also be a remote control unit 5, i.e. an off-board control unit, or a combination of an on-board and off-board control unit. The control unit 5 may be configured to control the power assembly 1 by issuing control signals and by receiving status information relating to the power assembly 1. The control unit 5 may form part of the power assembly 1.

The control unit 5 is an electronic control unit and may comprise processing circuitry which is adapted to run a computer program as disclosed herein. The control unit 5 may comprise hardware and/or software for performing the method according to the invention. In an embodiment the control unit 5 may be denoted a computer. The control unit 5 may be constituted by one or more separate sub-control units. In addition, the control unit 5 may communicate by use of wired and/or wireless communication means.

Fig. 2 depicts a schematic illustration of a power assembly 1 according to an example embodiment of the invention. The power assembly 1 may for example be used in the vehicle 100 as shown in fig. 1.

The power assembly 1 comprises at least one fuel cell unit, herein a first fuel cell unit 2 and a second fuel cell unit 3. Each fuel cell unit 2, 3, although not illustrated in detail, may comprise one or more fuel cells, typically several fuel cells. The fuel cells may also be denoted as a fuel cell stack, wherein the fuel cell stack may comprise several hundreds of fuel cells. Further, each fuel cell unit is arranged to provide the fuel cells with necessary supply of hydrogen fuel (H₂) and air, cooling, etc. Each fuel cell unit 2, 3 may comprise its own control system, which may be communicatively connected to the control unit 5. Although the power assembly 1 in the illustrated embodiment comprises two fuel cell units 2, 3, it may alternatively comprise a single fuel cell unit, or more than two fuel cell units, such as three or more fuel cell units. Furthermore, when several fuel cell units are provided, the fuel cell units may be either independently controllable or commonly controllable. When independently controllable, each fuel cell unit may be controlled to an on-state or an off-state regardless of the state(s) of the other fuel cell unit(s). When two or more of the fuel cell units are commonly controllable, those fuel cell units are controllable in common to an on-state or an off-state, i.e., all fuel cell units are controlled in common to the same state. Two fuel cell units may in some cases be controlled in dependence on one another, such that one of the fuel cell units is controlled to an on-state or an off-state in dependence on the state of the other fuel cell units.

The power assembly 1 further comprise an ESS 4, which may in turn comprise one or more batteries for storing excess electric energy produced by the fuel cell units 2, 3, as well as for providing output power from the power assembly 1. The ESS 4 is electrically connected to the fuel cell units 2, 3. The ESS 4 may comprise its own control system, communicatively connected to the control unit 5. The ESS 4 may further be used for storing energy regenerated during braking, or it may be configured for charging by a charger, such as from an external power grid.

The power assembly 1 may further comprise power electronics (not shown) for converting electric power generated by the fuel cell units 2, 3 and/or provided from the ESS 4 to electric power usable by a power consumer 6, such as an electric motor or another power consumer. Further, in addition or alternative to what is mentioned in the above, the power assembly 1 may comprise various components such as compressors, sensors, pumps, valves, and electrical components.

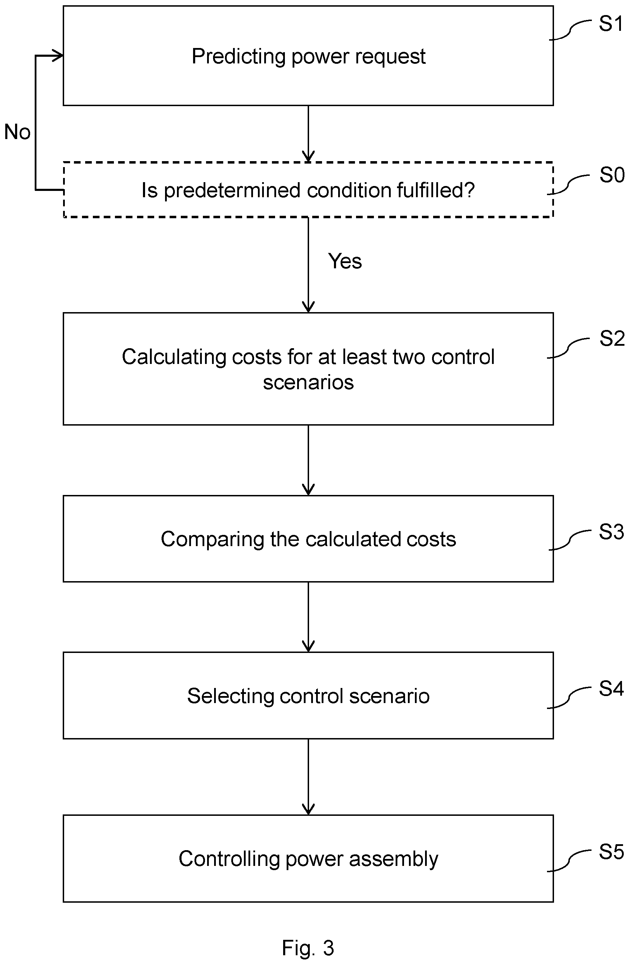

Fig. 3 depicts a method for controlling a power assembly, such as the power assembly 1 illustrated in fig. 2, according to an embodiment of the invention. The method may be performed by the control unit 5.

In a first step S1, a power demand for power delivery from the power assembly 1 over a prediction horizon, such as a prediction time horizon, is predicted. When the power assembly 1 is adapted to deliver power contributing to the propulsion of a vehicle 100, the step S1 of predicting the power demand may comprise:
- *receiving* vehicle related information comprising at least one of traffic information for an expected travelling route of the vehicle 100 during the prediction horizon, terrain information for the expected travelling route, topographic information for the expected travelling route during the prediction horizon, weather information for the expected travelling route during the prediction horizon, and vehicle gross weight information, and
- using said received vehicle related information for *predicting* the power demand over the prediction horizon.

In a second step S2, costs associated with controlling the power assembly 1 according to at least two different control scenarios during the prediction horizon are calculated. The costs may be monetary costs. The at least two different control scenarios include a first control scenario in which both the fuel cell units 2, 3 are turned off and do not provide any output power, and a second control scenario in which the fuel cell units 2, 3 are turned on and provide output power. For each one of the control scenarios, the associated cost includes at least a cost associated with an expected ability or non-ability of the power assembly 1 to deliver power according to the predicted power demand, a cost associated with fuel consumption of the fuel cell units 2, 3, and a cost associated with fuel cell degradation. In the illustrated power assembly 1, comprising two independently controllable fuel cell units 2, 3, costs associated with four different control scenarios are calculated in parallel: the first control scenario in which both fuel cell units 2, 3 are turned off, the second control scenario in which both fuel cell units 2, 3 are turned on, a third control scenario in which the first fuel cell unit 2 is turned on and the second fuel cell unit 3 is turned off, and a fourth control scenario in which the second fuel cell unit 3 is turned on and the first fuel cell unit 2 is turned off.

When the power assembly 1 is being operated with the fuel cell units 2, 3 turned off, calculating the cost associated with controlling the power assembly 1 according to the second control scenario, i.e., in which both fuel cell units 2, 3 are turned on, may comprise calculating a cost associated with start-up of the first fuel cell units 2, 3. This cost may include both a cost arising due to fuel cell degradation at start-up, and a fuel cost.

When the power assembly 1 is being operated with both fuel cell units 2, 3 turned on, calculating the cost associated with controlling the power assembly 1 according to the first control scenario, i.e., in which both fuel cell units 2, 3 are turned off, may comprise calculating a cost associated with shutdown of the fuel cell units 2, 3. This cost may include both a cost arising due to fuel cell degradation at shutdown, and a fuel cost.

The expected ability or non-ability of the power assembly to deliver power according to the predicted power demand in at least the first control scenario, in which the fuel cell units 2, 3 are turned off, may be determined by obtaining a system state, such as a battery state, of the ESS 4 and based thereon calculating the ability, or the non-ability. The system state, such as the SoC, the ESS temperature, etc, may be indicative of the ability of the ESS 4 to deliver output power complying with the predicted power demand. The system state(s) of the ESS 4 may be determined by the control system of the ESS 4 and communicated to the control unit 5. The cost associated with the expected ability or non-ability is calculated from, e.g., an expected delay due to non-ability of the power assembly 1 to deliver power according to the predicted power demand with the fuel cell units 2, 3 turned off, i.e., using only the ESS 4 for power delivery.

The cost associated with each one of the control scenarios may further comprise a cost associated with an expected degradation of the ESS 4 over the prediction horizon.

In a third step S3, the calculated costs of the respective at least two control scenarios are compared to obtain a comparison result. In the exemplary embodiment, the costs of all four control scenarios are compared.

In a fourth step S4, one of the at least two control scenarios is selected based on the comparison result. Typically, the most beneficial control scenario from a cost point of view is selected, i.e., the control scenario associated with the lowest total cost in terms of at least fuel cost, fuel cell degradation, and ability or non-ability to deliver power in accordance with the predicted power demand.

In a fifth step S5, the power assembly 1 is controlled according to the selected control scenario.

The method may include an optional step S0, marked by a dashed line, in which it is determined whether at least one predetermined condition is fulfilled. When the predetermined condition is fulfilled, the step S2 of calculating the costs for the at least two different control scenarios is performed. When the predetermined condition is not fulfilled, costs are not calculated for all possible cost scenarios. Instead, costs may be calculated for a single control scenario, such as for the first or second control scenario only.

For example, when the power assembly 1 is being operated with both of the fuel cell units 2, 3 turned on, the at least one predetermined condition may be set so that it is considered fulfilled when a SoC of the ESS 4 is above a first threshold level. If the SoC is below the first threshold level, it may not be desired or even possible to turn off the fuel cell units 2, 3. Thus, if a SoC value received from the control system of the ESS 4 is below the first threshold level, costs are only calculated for the second control scenario in which the fuel cell units 2, 3 continue to be turned on. The at least one predetermined condition may also comprise a condition related to the predicted power demand, such as a first power demand threshold level below which the condition is considered fulfilled and costs for both the first and second control scenarios are calculated. A combination of SoC and power demand thresholds may be used to determine if the at least one predetermined condition is fulfilled.

When the power assembly 1 is instead being operated with the fuel cell units 2, 3 turned off, the at least one predetermined condition may be set so that it is considered fulfilled when the SoC of the ESS 4 is below a second threshold level. As long as the SoC is above the second threshold level, the ESS 4 is expected to be able to deliver sufficient output power without turning on the fuel cell units 2, 3. Hence, costs are only calculated for the first control scenario in which the fuel cell units 2, 3 continue to be turned off. The second threshold level is herein set to a higher value than the first threshold level.

If the at least one predetermined condition further comprises a condition related to the predicted power demand, it may in this case be considered fulfilled if the power demand is above a second power demand threshold level. Hence, if the power demand is above the second power demand threshold level, costs for both the first and second control scenarios are calculated. The at least one predetermined condition may further comprise condition related to time, wherein, when the power assembly 1 has been operated with the fuel cells 2, 3 turned off for a time period exceeding a time threshold, the predetermined condition is considered fulfilled and costs for both the first and second control scenarios are calculated.

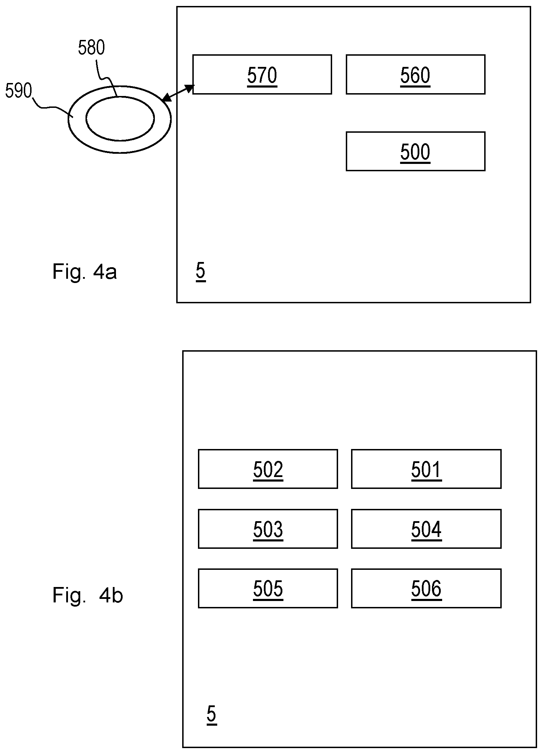

To perform the method steps described herein, the control unit 5 may be configured to perform any one or more of the above steps S0-S5, and/or any other examples or embodiments herein. The control unit 5 may for example comprise an arrangement as depicted in Figs. 4a and 4b.

The control unit 5 may comprise an input and output interface 500 configured to communicate with any necessary components and/or entities of embodiments herein, e.g., to receive system states from the ESS 4, to receive traffic information, terrain information, topographic information, weather information, and vehicle gross weight information. The input and output interface 500 may comprise a wireless and/or wired receiver (not shown) and a wireless and/or wired transmitter (not shown). The control unit 5 may be arranged in any suitable location of the vehicle 100. The control unit 5 may use the input and output interface 500 to control and communicate with sensors, actuators, subsystems, and interfaces in the vehicle 100 by using any one or more out of a Controller Area Network (CAN), ethernet cables, Wi-Fi, Bluetooth, and other network interfaces.

The control unit 5 is arranged to, by means of a predicting unit 501, predict the power demand for power delivery from the power assembly 1 over the prediction horizon based on data received via the interface 500.

The control unit 5 may further be arranged to, by means of a determining unit 502, determine whether the at least one predetermined condition is fulfilled.

The control unit 5 is further arranged to, by means of a calculating unit 503, calculate the costs associated with controlling the power assembly 1 according to the at least two different control scenarios during the prediction horizon.

The control unit 5 is further arranged to, by means of a comparing unit 504, compare the calculated costs of the respective at least two control scenarios to obtain a comparison result.

The control unit 5 is further arranged to, by means of a selecting unit 505, select one of the at least two control scenarios based on the comparison result, and, by means of a controlling unit 506, control the power assembly 1 according to the selected control scenario.

The method described herein may be implemented through a processor or one or more processors, such as the processor 560 of a processing circuitry in the control unit 5 depicted in Fig. 4a, together with computer program code for performing the functions and actions of the embodiments herein. The program code mentioned above may also be provided as a computer program medium, for instance in the form of a data computer readable medium carrying computer program code for performing the method steps described herein when being loaded into the control unit 5. One such computer readable medium may be in the form of a memory stick. The computer program code may furthermore be provided as pure program code on a server and downloaded to the control unit 5.

The control unit 5 may further comprise a memory 570 comprising one or more memory units. The memory 570 comprises instructions executable by the processor in control unit 5. The memory 570 is arranged to be used to store, e.g., information, data, control scenarios, costs, etc. to perform the methods herein when being executed in the control unit 5.

In some embodiments, a computer program 580 comprises instructions, which when executed by a computer, e.g., the at least one processor 560, cause the at least one processor of the control unit 5 to perform the method steps described above.

In some embodiments, a computer-readable storage medium 590 comprises the respective computer program 580. The computer-readable storage medium 590 may comprise program code for performing the method steps described above when said program product is run on a computer, e.g., the at least one processor 560.

Those skilled in the art will appreciate that the units in the control unit 5 described above may refer to a combination of analogue and digital circuits, and/or one or more processors configured with software and/or firmware, e.g., stored in the control unit 5, that when executed by the respective one or more processors such as the processors described above. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip.

It is to be understood that the present invention is not limited to the embodiments described above and illustrated in the drawings; rather, the skilled person will recognize that many changes and modifications may be made within the scope of the appended claims.

## Claims

1. A computer-implemented method for controlling a power assembly (1), the power assembly (1) comprising a fuel cell unit (2, 3) and an electric energy storage system (4) for storing excess electric energy produced by the fuel cell unit (2, 3), the method comprising:
- *predicting* (S1) a power demand for power delivery from the power assembly (1) over a prediction horizon,
- *calculating* (S2) costs associated with controlling the power assembly (1) according to at least two different control scenarios during the prediction horizon, wherein the at least two different control scenarios include a first control scenario in which the fuel cell unit (2, 3) is turned off, and a second control scenario in which the fuel cell unit (2, 3) is turned on, wherein, for each of said control scenarios, the associated cost includes at least:
a cost associated with an expected ability or non-ability of the power assembly (1) to deliver power according to the predicted power demand,
a cost associated with fuel consumption, and
a cost associated with fuel cell degradation,
- *comparing* (S3) the calculated costs of the respective at least two control scenarios to obtain a comparison result,
- *selecting* (S4) one of the at least two control scenarios based on the comparison result, and
- *controlling* (S5) the power assembly (1) according to the selected control scenario.

2. The method according to claim 1, wherein, in the second control scenario, a ratio between power provided by the electric energy storage system (4) and power provided by the fuel cell unit (2, 3) is allowed to vary over the prediction horizon.

3. The method according to claim 1 or 2, wherein the power assembly (1) comprises at least two fuel cell units (2, 3), each one of the at least two fuel cell units (2, 3) being independently controllable to an on-state in which the fuel cell unit (2, 3) is turned on and to an off-state in which the fuel cell unit (2, 3) is turned off, wherein the at least two control scenarios comprise a plurality of control scenarios, each one of the control scenarios being associated with a unique combination of on-state(s) and off-state(s) of the at least two fuel cell units (2, 3).

4. The method according to any one of the preceding claims, wherein, when the power assembly (1) is operated with the fuel cell unit (2, 3) turned off, calculating the cost associated with controlling the power assembly (1) according to the second control scenario comprises calculating a cost associated with start-up of the fuel cell unit (2, 3).

5. The method according to any one of the preceding claims, wherein, when the power assembly (1) is operated with the fuel cell unit (2, 3) turned on, calculating the cost associated with controlling the power assembly (1) according to the first control scenario comprises calculating a cost associated with shutdown of the fuel cell unit (2, 3).

6. The method according to any one of the preceding claims, wherein the expected ability or non-ability of the power assembly (1) to deliver power according to the predicted power demand in at least the first control scenario is determined by obtaining a system state of the electric energy storage system (4) and based thereon calculating said ability or non-ability.

7. The method according to any one of the preceding claims, wherein the cost associated with each one of the at least two control scenarios further comprises a cost associated with an expected electric energy storage system degradation.

8. The method according to any one of the preceding claims, wherein the method further comprises determining whether at least one predetermined condition is fulfilled, wherein the calculation of the costs for the at least two different control scenarios is only performed in response to the at least one predetermined condition being fulfilled.

9. The method according to claim 8, wherein:
when the power assembly (1) is being operated with the fuel cell unit (2, 3) turned on, the at least one predetermined condition is considered fulfilled when a state-of-charge of the electric energy storage system (4) is above a first threshold level, and/or
when the power assembly is being operated with the fuel cell unit (2, 3) turned off, the at least one predetermined condition is considered fulfilled when a state-of-charge of the electric energy storage system (4) is below a second threshold level.

10. The method according to any one of the preceding claims, wherein the power assembly (1) is adapted to deliver power contributing to the propulsion of a vehicle (100), and wherein *predicting* the power demand comprises:
- *receiving* vehicle related information comprising at least one of traffic information for an expected travelling route of the vehicle (100) during the prediction horizon, terrain information for the expected travelling route, topographic information for the expected travelling route during the prediction horizon, weather information for the expected travelling route during the prediction horizon, and vehicle gross weight information, and
- using said received vehicle related information for *predicting* the power demand over the prediction horizon.

11. A control unit (5) for controlling a power assembly (1), the control unit (1) being configured to perform the method according to any of claims 1-10.

12. A power assembly (1) comprising one or more fuel cell units (2, 3) and an electric energy storage system (4) for storing excess electric energy produced by the one or more fuel cell units (2, 3), the power assembly (1) further comprising the control unit (5) according to claim 11.

13. A vehicle (100) comprising a power assembly (1) according to claim 12, wherein the power assembly (1) is adapted to deliver power contributing to the propulsion of the vehicle (100).

14. A computer program (580) comprising program code means for performing the method according to any of claims 1-10 when the program (580) is run on a computer.

15. A computer readable medium (590) carrying a computer program (580) comprising program code means for performing the method according to any of claims 1-10 when the program is run on a computer.
